# EUROPEAN PATENT APPLICATION

(11) **EP 4 374 696 A1**
(43) Date of publication of application: **29.05.2024**
(21) Application number: 22386086.7
(22) Date of filing: 27.11.2022
(51) Int. Cl.: A01N 31/08, A01P 1/00, A01N 59/20, A01N 59/00

(54) **ANTIBACTERIAL FORMULATIONS AGAINST MEMBERS OF XANTHOMONADACEAE FAMILY PREVENTING PLANT DISEASES**

(71) Applicant: Special Research Fund Account (ELKE) Hellenic Mediterranean University, 71410 Heraklion-Crete (GR); Ververidis, Filippos, 71410 Heraklion, Crete (GR); Trantas, Emmanouil, 71410 Heraklion, Crete (GR)
(72) Inventor: Ververidis, Filippos, 71410 Heraclion (GR); Theocharis, Andreas, 71410 Heraclion (GR); Trantas, Emmanouil, 71410 Heraclion (GR)
(74) Representative: Vavekis, Konstantinos

(57) **Abstract**

The present invention provides a composition for the treatment and prevention of plants from members of Xanthomonadaceae family and more specifically of *Xanthomonas* and *Xylella.* The bactericidal composition comprises Hydroxytyrosol (HT), a natural phytochemical, here biotechnologically produced and purified, combined with certain salt-based or metal formulations and acts as plant disease protectants against model or plant pathogenic bacteria.

## Description

### BACKGROUND

### Field of the invention

This invention relates to a composition for plant disease protection and treatment against members of Xanthomonadaceae family and specifically *Xanthomonas and Xylella* using Hydroxytyrosol.

### State of the art

Certain plant pathogens of bacterial origin like members of Xanthomonadaceae family appear to have a very wide variety of plant hosts, thus making them very difficult to constrain (especially *Xylella* and *Xanthomonas species),* while in some cases, quarantine procedures in non-infected countries, are extremely important to apply in order to prevent spreading of such pathogens *(Xylella sp.).*

*Xylella fastidiosa (X.f.)* is a microorganism that infects more than 350 plant species that include major agriculturally important species such as grapevine, citrus, peach, almonds, and recently olive trees [Chatterjee et al., 2008]. X.f. infection cause serious plant disease symptoms leading to plant death that constantly challenge the agricultural industry as well as food security of European Union, particularly Southern Mediterranean countries, though Greece is perhaps the only one not included yet [Mansfield et al., 2012] . In Europe it was firstly introduced in the region of Salento, Italy causing the olive quick decline syndrome back in 2013 [Saponari et al., 2013]. It was then successively identified in the island of Corsica, France, Germany, Spain, Portugal and Israel (EPPO Global Database, 2020). X. *fastidiosa* (*X*.*f*.) sp. and pathovars have been responsible for significant economic losses that are projected to cost up to €5.2 billion over the next 50 years [Castro, et al., 2021]. Indeed, in Greece and some other Balkan countries, *Xf* plant infections have not been identified yet and thus *X.f.* and all its related pathovars are considered as quarantined plant pathogens.

Greece is the third country with the highest olive oil production and the fifth country with the highest production on table olives counting more than 170 million trees and 21% of the total cultivated area. The introduction, establishment and spread of this pathogen into a X.f.-free area, like Greece, will be devastating for its agricultural sector. According to the European Regulation, in the case of pathogen detection, the contingency plan requires the destruction of the plants and appropriate phytosanitary measures against insect vectors in a zone of 50m (about 8.000 m²) around the infection (EU, 2015). According to the EFSA Plant Health Panel, to date, there is no method to cure the diseased plants in the field [Bragard et al., 2019]. Practices on pruning, fertilization or irrigation could have impact on the disease development but this is not enough to cure plants.

The bacterium is airborne transferred through non-hostile insects for plants into the xylem vessels of the competent hosts and are injected by insect vector's stylet. More specifically, in Europe, the pathogen has been identified in olive orchards of Italy in individuals of various xylem feeders such as, *Philaenus spumarius* (Hemiptera: Aphrophoridae) and *Neophilaenus campestris* (Hemiptera: Aphrophoridae) [Ben Moussa et al., 2016]. This is the dominant action for the initiation of the disease; the bacterium then colonizes the xylem and moves against water flow creating aggregates that perturb water transport [Petit et al., 2021]. The latter phenomenon, causes tree parts to dehydrate, dry which eventually die [Cardinale et al., 2018]. The only official management strategy to minimize X.f. spread in the field includes removal of infected plants, through severe pruning, and control of insect vectors with insecticides.

Several attempts have been done using different techniques to prevent or treat plants for Xanthomonas family members including *Xyllela fastidiosa* including methods using eucalyptus oil, EP4052579A1 LAINCO SA 2022-09-07, bacteriophage based treatment EP2909317A2 , TEXAS A & M UNIV SYS, 2015-08-26 and dithiine-tetracarboximides WO2014139897A1 BAYER CROPSCIENCE AG 2014-09-18, with either low efficiency, high toxicity or difficulty to produce in significant quantities required for plant treatments.

The research for *X*. *fastidiosa* includes treatment against growth of *Xanthomonas* species due to their genomic as well as functional similarities between the X. *fastidiosa* and certain species of *Xanthomonas* as pattern of plant infection. For example, a phylogenomic tree using more than the 400 conserved genes phylogenetically linked *Xylella* and *Xanthomonas* genera [Kumar et al., 2019]. Moreover, the X.f. colonizes the xylem vessels of the plant, which blocks the uptake of essential nutrients and water for plant health [Morelli et al., 2021; Sabella et al., 2019] by the bacterial cells or plant metabolites [lonescu et al., 2014]. Once this happens, severe symptoms of *Xylella* become apparent, which often lead to plant death as they cannot be cured. Similar symptoms are produced by *Xanthomonas* species like X. *campestris* pv. campestris (X.c.c.); it enters the host through hydathodes or wounds to spread systemically through the vascular system [Ryan et al., 2011]. It is characteristic for *Brassica* sp. plants known to cause the black rot disease, characterized by V-shaped chlorotic lesions spreading from the leaf margins (Ryan et al., 2011). These genetic similarities as well as of the infection mechanism, led us to choose X.c.c. to work with instead of the quarantine bacterium X.f. [da Silva et al., 2001; Dow and Daniels, 2000; Wells et al., 1987].

### Brief description of the invention

The present invention discloses compositions that are used as formulations that are plant disease protectants against model or plant pathogenic bacteria. These formulations are made using as main active ingredient hydroxytyrosol (HT), a natural phytochemical, here biotechnologically produced, combined with certain salt-based or metal additions.

It is known that natural plant products may possess antimicrobial activity against phytopathogens and especially against *Xylella fastidiosa* concluded after performing *in-vitro* tests [Maddox et al., 2010; Morelli et al., 2021; Taguri et al., 2006]. However, in order to apply commercially any natural plant product with antimicrobial activity would require vast quantities to have a regular commodity and constant source of origin.

Hydroxytyrosol (HT) is a phenolic compound that can be mainly found in olive tissues fruits and olive oil, while it has been affiliated with health benefits for humans [Fernández-Mar et al., 2012; Quiles et al., 2006]. Several studies indicate that in addition to its strong antioxidant properties, HT shows to possess antiinflammatory, as well as neuroprotective effects, reduces the body's allergic reactions and exerts human-related anti-viral and anti-microbial action [Fernández-Bolanos et al., 2012]. Especially the latter is of great importance by comparison for agriculture, since it has been described as a potent antimicrobial agent against human diseases [Bisignano et al., 1999; Medina-Martínez et al., 2015; Zoric et al., 2013]. Being identified with such important human protective properties, EFSA (European Food Safety Authority) decided to substantiate and officially recognize the health claims of hydroxytyrosol and other related derivatives of olive oil polyphenols (EFSA Panel on Dietetic Products and Allergies, 2011). Although HT and its derivatives can be identified from olive mill waste waters and other plant sources, they can be recovered in inefficient quantities for commercial use, while chemical synthesis appears to be uneconomic for industrial scale production [Trantas et al., 2019].

The present invention discloses a method of preventing or reducing symptoms or treating harmful plant bacterial diseases caused by plant pathogenic bacteria, in a plant comprising, contacting or administering to the plant a composition comprising an aqueous solution of hydrotyrosol and an inorganic salt, wherein the pH of the solution is in a range between 7,5 and 12.

In the following experiments hydroxytyrosol was produced according to Trantas et al 2019 method, based on biotechnological production through metabolically engineered biofactories of laboratory *Escherichia coli* strains in a control manner of bioreactor as described in detail in the analytical description. However, any production method is suitable to produce hydroxytyrosol for the disclosed invention. The specific method allows higher amounts of hydroxytyrosol to be produced compared to prior art production methods of hydroxytyrosol.

In an embodiment, exceptional results were achieved concerning preventing or reducing symptoms or treating harmful plant bacterial diseases caused by plant pathogenic bacteria, in a plant when the composition comprises of an aqueous solution comprising Hydroxytyrosol and Na₂CO₃ or Hydroxytyrosol with Na₂CO₃ and NaHCOs or Hydroxytyrosol with CuSO₄.

In one embodiment the aqueous solution comprised Hydroxytyrosol and Na₂CO₃ with concentrations between 10 and 1000 µg/ml (Hydroxytyrosol) and 3 to 7 mM (Na₂CO₃) and more preferably 90 and 650 µg/ml and 4 to 6 mM respectively. Higher concentrations of 1000 µg/ml hydroxytyrosol require higher amounts of Na₂CO₃ with no additional benefit for the treatment of the plants. Exceptional results are also observed for the treatment of the plants, when the said aqueous solution comprises Hydroxytyrosol in a concentration 10 and 1000 µg/ml, Na₂CO₃ in a concentration between 1 to 10 mM and NaHCO₃ in a concentration between 3 to 20 mM.

When the said aqueous solution comprises Hydroxytyrosol in a concentration 10 and 1000 µg/ml and CuSO₄ in a concentration between 20 and 100 µM the effect was also successful treatment of the plants.

The above compositions have been used for both the prevention from and for the treatment of the plants against harmful plant bacterial diseases caused by plant pathogenic bacteria.

Another aspect of the invention are the harmful plant bacterial diseases caused by plant pathogenic bacteria that the disclosed composition is used to protect healthy plants and to cure infected plants. The method has been applied to Xanthomonadaceae family and specifically *Xanthomonas campestris pv. campestris (Xcc), Xanthomonas campestris pv. vesicatoria (Xcv)* and *Xylella fastidiosa* as well as to *E. coli,* but due to similarities and preliminary results, the group of bacterial harmful organisms to plants that are treated as above are any or a combination of any of the following: *Acidovorax avenae, Burkholderia spec, Burkholderia glumae, Candidatus Liberibacter* spec, *Liberibacter asiaticus* (Las), *Corynebacterium, Erwinia amylovora, Erwinia carotovora (=Pectobacterium carotovorum), Erwinia carotovora* subsp. atroseptica, *Erwinia carotovora* subsp. *carotovora, Erwinia chrysanthemi, Erwinia chrysanthemi* pv. zeae, *Erwinia herbicola, Erwinia stewartiii, Erwinia uredovora, Dickeya dedantii, Dickeya solani, Pseudomonas syringae, Pseudomonas syringae* pv. actinidae, *Pseudomonas syringae* pv. glycinea, *Pseudomonas syringae* pv. lachrymans, *Pseudomonas syringae* pv. tomato, *Pseudomonas tumefaciens* (=Agrobacterium tumefaciens), *Streptomyces* scabies, *Xanthomonas ampelina, Xanthomonas axonopodis, Xanthomonas axonopodis* pv. citri, *Xanthomonas axonopodis* pv. glycines, *Xanthomonas campestris, Xanthomonas campestris* pv. musacearum, *Xanthomonas campestris* pv. pruni, *Xanthomonas campestris* pv. viticola, *Xanthomonas fragariae* and *Xanthomonas translucens* or *Xylella fastidiosa* with various pathovars.

Preferably the bacterial harmful organisms that are treated or prevented as above causing disease to plants are any of the following: *Acidovorax avenae* in rice, *Burkholderia glumae* in rice, *Candidatus Liberibacter* spec, and/or *Xanthomonas axonopodis* pv. citri in citrus, *Pseudomonas syringae* pv. actinidae in Kiwi, Xanthomonas campestris and/or Xanthomonas campestris pv. pruni in peaches, *Pseudomonas syringae* pv. glycinea and/or *Xanthomonas axonopodis* pv. glycines in soybeans, *Burkholderia* spec, and/or *Xanthomonas transluscens* in cereals, *Pseudomonas syringae, Pseudomonas syringae* pv. tomato and/or *Xanthomonas campestris* in tomatoes, *Pseudomonas syringae* and/or *Pseudomonas syringae* pv. *lachrymans* in cucumbers, *Erwinia atroseptica, Erwinia caratovora* and/or *Streptomyces scabies* in potatoes; *Xanthomonas ampelina, Xanthomonas campestris* pv. viticola, *Agrobacterium tumefaciens* and *Xylella fastidiosa* in grapewines, *Xylella fastidiosa* in olives *Erwinia amylovora* in apple and pears; *Pectobacterium carotovorum* in potatoes; *Xanthomonas campestris* pv. campestris pv. in broccoli.

In another embodiment of the invention the pharmaceutical composition can protect or treat any of the following plants a grapevine, citrus, olive, almond, coffee, alfalfa, oleander, oak, sweetgum, redbud, elm, peach, apricot, plum, blackberry, mulberry, fruit crops, vegetables, potatoes, cereals, corn, rice, broccoli and soybeans.

In a further embodiment the application of the pharmaceutical composition through contacting comprises introducing the composition solution into the plan and more specifically introducing the composition solution into the plant by injection, via the root system, by injection, by spray, or by mist, or by dust or dripping contacting the plant.

### Brief description of the drawings

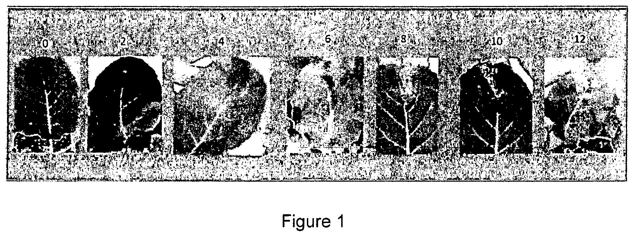

Figure 1 shows the creation of a Disease Index indicating the disease symptoms/ effects of *Xanthomonas campestris pv. campestris (Xcc)* causing on a leaf based on symptoms severity to broccoli leaf (from 0 to 12) at a period of 21 days of the artificial infection experiment. The Disease Index is an indication of the severity of the affected leaf in a linear scale from 0 to 12 where 0 is the healthy leaf and 12 the leaf after 21 days after the infection.

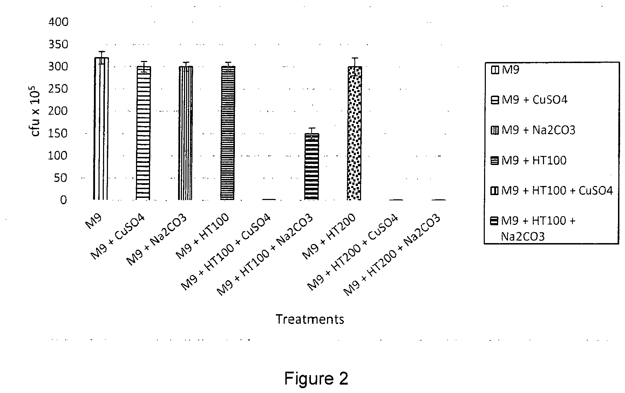

Figure 2: *E. coli* colony-forming units (cfu, after 24 h) in different treatments. Horizontal axis Treatments, Vertical axis in cfu X 10⁵. It shows the effect of various combinations of hydroxytyrosol (HT100, 100 µg/ml; HT200, 200 µg/ml), copper sulfate (40 µM) and sodium carbonate (5 mM) on *in-vitro* growth of *Escherichia coli* in M9 minimal medium. Viability tests were performed on LB-agar Petri dishes following the bacteria dilution method, 24 hours post-treatment.

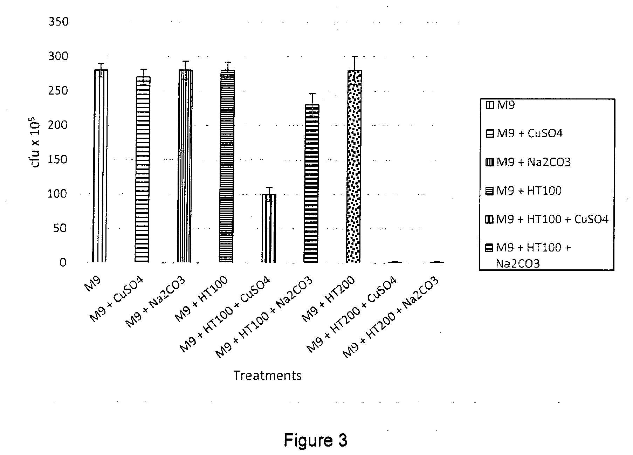

Figure 3: *E. coli* colony-forming units (cfu, after 24 h) in different treatments. Horizontal axis Treatments, Vertical axis in cfu X 10⁵. It shows the effect of various combinations of hydroxytyrosol (HT100, 100 µg/ml; HT200, 200 µg/ml), copper sulfate (40 µM) and sodium carbonate (5 mM) on in-vitro growth of Escherichia coli in M9 minimal medium. Viability tests were performed on LB-agar Petri dishes following the bacteria dilution method, 48 hours post-treatment.

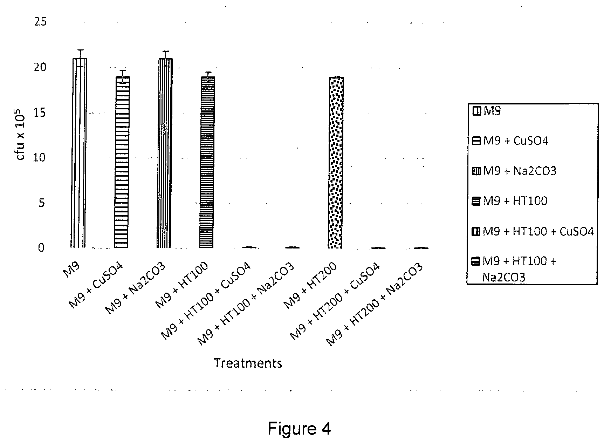

Figure 4: X. *campestris* pv. campestris colony-forming units (cfu, after24 hours) in different treatments. Horizontal axis Treatments, Vertical axis in cfu X 10⁵. It shows the effect of various combinations of hydroxytyrosol (HT100, 100 µg/ml; HT200, 200 µg/ml), copper sulfate (40 µM) and sodium carbonate (5 mM) on in-vitro growth of X. *campestris* pv. campestris in M9 minimal medium. Viability tests were performed on LB-agar Petri dishes following the bacteria dilution method, 24 hours post-treatment.

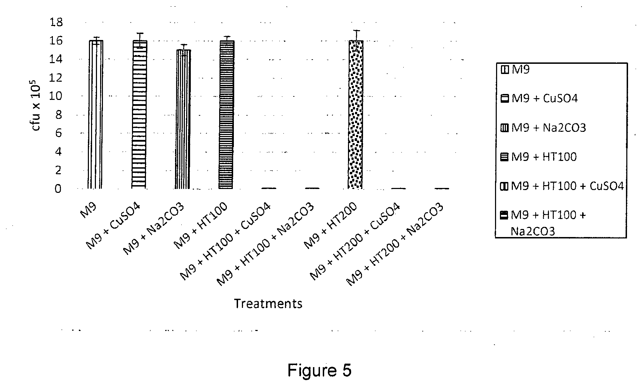

Figure 5: X. *campestris* pv. campestris colony-forming units (after 48 hours) in different treatments. Horizontal axis Treatments, Vertical axis in cfu X 10⁵. It shows the effect of various combinations of hydroxytyrosol (HT100, 100 µg/ml; HT200, 200 µg/ml), copper sulfate (40 µM) and sodium carbonate (5 mM) on in-vitro growth of X. campestris pv. campestris in M9 minimal medium. Viability tests were performed on LB-agar Petri dishes following the bacteria dilution method, 48 hours post-treatment.

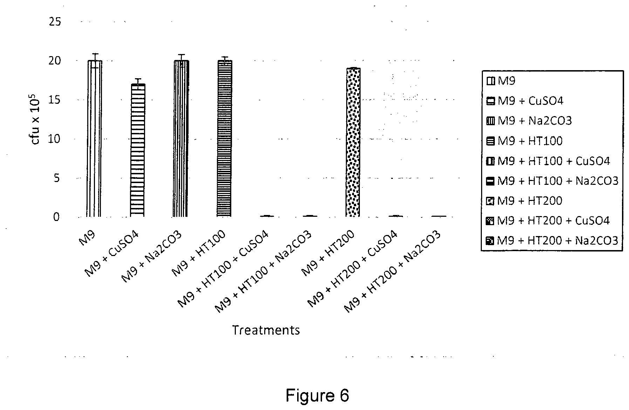

Figure 6: X. *campestris* pv. vesicatoria colony-forming units (after 24 hours), in different treatments. Horizontal axis Treatments, Vertical axis in cfu X 10⁵. It shows the effect of various combinations of Hydroxytyrosol (HT100, 100 µg/ml; HT200, 200 µg/ml), copper sulfate (40 µM) and sodium carbonate (5 mM) on in-vitro growth of X. *campestris pv. vesicatoria* in M9 minimal medium. Viability tests were performed on LB-agar Petri dishes following the bacteria dilution method, 24 hours post-treatment.

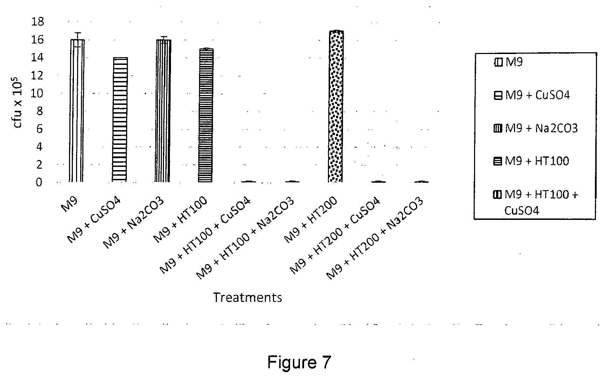

Figure 7: *X. campestris* pv. vesicatoria colony-forming units (cfu, after 48 hours), in different treatments. Horizontal axis Treatments, Vertical axis in cfu X 10⁵. It shows the effect of various combinations of hydroxytyrosol (HT100, 100 µg/ml; HT200, 200 µg/ml), copper sulfate (40 µM) and sodium carbonate (5 mM) on in-vitro growth of X. *campestris pv. vesicatoria* in M9 minimal medium. Viability tests were performed on LB-agar Petri dishes following the bacteria dilution method, 48 hours post-treatment.

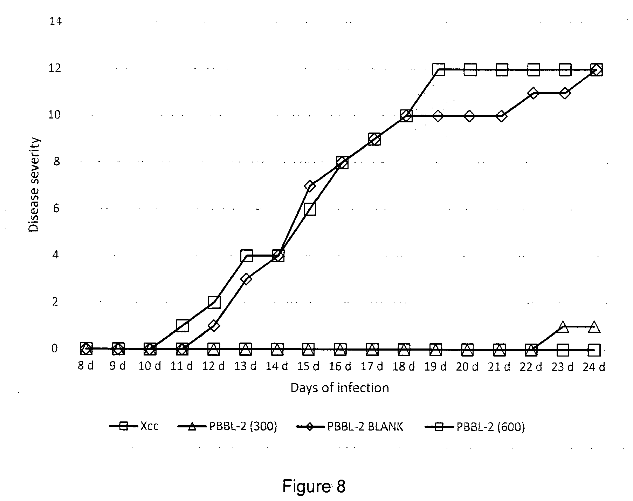

Figure 8: Effect of PBBL-X formulation on broccoli plants. Horizontal axis Days of Infection, Vertical axis Disease severity. It shows the effect of PBBL-X (aqueous solutions of hydroxytyrosol -HT applied as biostimulator) formulation on disease initiation (days post-infection) and severity on *Xanthomonas campestris* pv. campestris (*Xcc*) artificially infected *Brassica oleracea* var. italica plants. PBBL-300 contains HT at 300µg/ml combined with 2 mM Na₂CO₃ and 5 mM NaHCO₃, while PBBL-600 contains HT at 600µg/ml combined with 2 mM Na₂CO₃ and 5 mM NaHCOs. PBBL-X-BLANK stands for the control formulation without Hydroxytyrosol. The infection severity was estimated by the following scale 0 (healthy tissues) - 12 (tissue collapse).

While the present invention is amenable to various modifications and alternative forms, specifics thereof have been shown by way of example in the drawings and will be described in detail. It should be understood, however, that the intention is not to limit the present invention to the particular embodiments described. On the contrary, the intention is to cover all modifications, equivalents, and alternatives falling within the spirit and scope of the present invention as defined by the appended claims.

### Detailed description of the invention

### Production of Hydrotyrosol

A metabolically engineered Escherichia coli strain capable of producing HT from a heterologous biosynthetic path using as precursor either tyrosine or 3,4-dihydroxyphenylalanine (L-DOPA) was constructed (Trantas et al., 2019). Production of HT in this protocol was followed according to this method, where a *Petroselinum crispum* DNA fragment of 1680 bp coding for an Aromatic Acetaldehyde Synthase (AAS) was cloned into the pACYC Duet expression vector (Novagen, Merck-Millipore), utilizing the Ncol and BamHI restriction enzymes to deliver the pACYC-PcAAS plasmid. The PcAAS gene sequence was experimentally confirmed and was transferred into the BL21(DE3) or HMS 174 E. coli strains to deliver the BL21-pACYC-PcAAS strain (B11T strain). The AAS gene proved active and so was its transcribed product in in-vitro reactions delivering high enzymatic activity at a stoichiometric rate.

Such a metabolically engineered *Escherichia coli* strain (described above) capable of producing HT from tyrosine (a cheap amino acid) may be also utilized. According to Trantas et al (2019), a *Ralstonia solanacearum* DNA fragment of 1504 bp coding for a Tyrosinase (TYR) was cloned into the pRSF Duet expression vector utilizing the Ndel and Xhol restriction enzymes, to produce the pRSF-RsTYR-PcAAS plasmid. The Ncol/Pstl fragment of the E. coli ALR-K gene fragment, coding for an Aldehyde Reductase - K gene (ALR-K), was cloned into the pCDF plasmid delivering the pCDF-ALRK plasmid. The TYR and ALR genes sequences were experimentally confirmed and the plasmids capable of producing HT were transferred into BL21(DE3) or HMS 174 *E. coli* strains to deliver the B3 strain (bearing both pRSF-RsTYR-PcAAS and pCDF-ALRK plasmids). The TYR gene proved active in in-vitro reactions delivering high enzymatic activity also at a stoichiometric rate.

HT was produced from the abovementioned metabolically engineered E. coli strains, grown in a fed-batch mode at a 50L semi-industrial scale bioreactor, where vessel temperature, agitation, pH and aeration was tightly controlled. The bioreactor's vessel was filled with 28L deionized water, the solid components of M9 minimal medium (6 g/L Na₂HPO₄·7H₂O, 3 g/L KH₂PO₄, 0.5 g/L NaCl, 1 g/L NH₄Cl, 120.4mg/L MgSO₄ and 11.1mg/L CaCl₂ as final concentrations) and was sterilized on-site. After the sterilization the temperature was set to 30°C and the medium was finalized with the addition of the rest of the components in liquid form that were previously filter-sterilized (final concentrations of, Thiamine 10 nM, Glucose 2%, Chloramphenicol 34 mg/L). The reaction was initiated with the inoculation of the medium with a 2 L overnight culture of B11T (locally constructed E. coli) strain grown in Lysogeny Broth (Yeast extract 5 g/L, Tryptone 10 g/L, NaCl 10 g/L). B11T was let to grow until optical density reached OD600=1. Then the inducer reagent Isopropyl β-D-1-thiogalactopyranoside (IPTG) was added to a final concentration of 200 µM to trigger transcription of the lac operon and thus to induce protein expression of the AAS gene and let to grow for additional 3 h. After induction, L-DOPA, the precursor molecule, was added to a final concentration of 4 mM and let bio-transform to HT for additional 12 h expecting a 1:1 bio-transformation efficiency. More specifically, the B11T *E. coli* strain was employed to bio-transform 114.4 gr of L-DOPA (4.8 mM) into HT in 4 successive batches of 30L cultivations. The precursor was fed into the bioreactor and after of about 24h, 68 gr of HT (3,64 mM) was produced giving a yield of ca 76%. The medium collected from 4 batches was frozen until purification. By the end of the reaction the B11T cells were separated from the medium by a high-speed tubular centrifuge and were froze until purification. Analyses were performed on a SCIEX Exion UHPLC coupled with a QTRAP 4500 Triple quadrupole mass spectrometry unit, in triplicates to estimate the production of HT. HT was then purified to >95% according to standard method of [Angelis et al., 2017].

### Materials for Bactericidal formulations and recipes

All primary chemical ingredients used in the present invention to create the bactericidal formulations (described below) were of analytical grade chemicals. All were prepared in our premises of Plant Biochemistry and Biotechnology Lab research group (PBBL) at the Laboratory of Biological & Biotechnological Applications (LBBA) of the Hellenic Mediterranean University (HMU). The salts CuSO₄, NaHCOs and Na₂CO₃ were purchased from Sigma company. All formulations were also prepared as 10-times concentrated stocks (10X) in aqueous solutions and diluted fresh at certain concentrations tested as stated in the experimental results section. These stock solutions were added directly after being sterilized to all aqueous liquid cultures of any bacteria grown alone as they were consisted of the ingredients stated in each Figure in the Results section. The biotechnologically produced Hydrotyrosol from the *E. coli* metabolically engineered cultures was purified to >99% according to standard method of [Angelis et al., 2017] and kept as an aqueous stock at concentrations of 1mg/ml before use at -20°C.

The composition of the formulation found to be most plant protective, prepared to apply in artificially infected plants of broccoli (Brassica oleracea var. italica) were the following coded etiquette, consisted of two major ingredients which were mixed prior to application and coded as PBBL-X: where X indicates the concentration of HT in µg/ml, found to be most successful. All PBBL-X formulations, apart from HT also contained Salt Buffer (Na₂CO₃ 2 mM, NaHCOs 5 mM) with pH 9.9. This salt buffer concentration at this pH value was found to be the most important step to create an efficient formulation for plant protection against pathogenic bacteria. No other buffer salt solutions with altered pH values have resulted in such an inhibitory effect when tested. We have discovered that the pH range is the key role in activating the reactions leading to the production of hydrogen peroxide production. H₂O₂ and then this maybe the initiating molecule for pathogen inhibition in planta and activation of plant auto-protection mechanisms (activation of priming effect through antioxidant and pathogenesis related genes novel biosynthesis).

PBBL-X-BLANK that contained the exact composition of PBBL-X but without HT was also tested as a Control treatment, apart from the PBBL-X formulations.

We found that the combination of ingredients included in PBBL-X create the mechanism of hydrogen peroxide production. H₂O₂ was measured with the use of FOX (ferrous ion oxidation-xylenol orange) method (Fabiani et al., 2011; Wolff, 1994). Inclusion of catalase resulted, as expected in loss of H₂O₂ production which also resulted in no symptomatology and thus plant leaf normal growth despite the artificial infection of Xcc.

### Plant material

### Plant growth/Growth stage

Plants of broccoli *(Brassica oleracea* var. italica) were grown in young stage in a nursery while undergoing the process of adaptation to 26°C greenhouse-controlled conditions and 16 h light period. The plants used in each experiment had 5 developed leaves of which the 3rd, 4th and 5th leaves were used for applications of the treated infections with the pathogenic bacterium *Xanthomonas campestris pv. campestris (Xcc).*

*Methods Applications of formulations to plants*/ *Plant infections.*

### A. Leaf injury technique

Leaves were artificially injured (pricked) with a needle in the middle of the lamina and at the central nerve where it branches with secondary leaf nerves. This procedure essentially causes a small wound which does not exceed 2 to 3 millimeters. All further preparations related to the artificial infections and applications of formulations were applied to this wound, and the infection is expected to start and spread from this wounding point.

For artificial inoculations the *Xcc* strain was used. The culture was grown in liquid LB broth and incubated overnight at 27°C in an orbital incubator at 230 rpm. The suspension was diluted to optical density OD600 0,1 for downstream applications (measured cell count 108 cells per ml).

### B. Application of PBBL-X formulations to plants

PBBL-X formulations fortified with HT at concentrations of 300 µg/ml (PBBL-300) or 600 µg/ml (PBBL-600) were prepared in salt buffers and cofactors (2 mM Na₂CO₃ and 5 mM NaHCO₃ pH 9.9). Upon application this initially led to H₂O₂. Hydrogen peroxide was estimated with the FOX method.

Afterwards, the following applications were important to follow in 3 consecutive steps:
- Application of each formulation on selected leaves 2 hours prior to innoculation. Application of 40 µl of each formulation was applied with a mini sprayer directly on the wound of the central nerve of the leaf lamina (1st application 2 hours prior to infection).
- After 2 hours of inoculation with the bacterial suspension (with optical density 0,1 corresponding to concentrations, of 108 cells per ml) another dose of PBBL-X took place by applying 20 µl with a pipette on the wound site of the central nerve of the leaf, in the exact same place where the formulations are applied (2nd application 2h after infection).
- After 24 hours the PBBL-X formulation was applied for a 3rd time (3rd application 24h after infection).

After the second application, plants were placed in food zip bags ensuring 90-100% relative humidity. 50 ml of tap water was added to the bag, while 3 to 4 holes ensured oxygen supply to the plants. Bags were placed in a growth chamber with controlled conditions, 26°C and a photoperiod of 16 hours. Observations regarding plant growth and infections were recorded macroscopically in comparison with the control plants (applications with water to control plants (not infected) or Xcc-infected plants were equal).

### Assessment of Symptomatology in plants

Symptomatology in broccoli plants was consistently recorded and confirmed according to bibliography, after artificial infections also to broccoli *Brassica oleracea* var. italica plants with *Xanthomonas campestris pv. campestris (Xcc)* which we created a symptom severity scale index from 0 (no symptom) to 12 (fully infected) with regard to leaf symptom, as shown in Figure 1:

### Statistics

All experiments were done in triplicates and mean values with standard error bars are shown in all Figures in Results Section.

Experimental series A. Effect of different bactericidal formulation on laboratory strains of metabolically engineered strains of *Escherichia coli* grown in aqueous nutritive media.

It was of primary importance to detect the limitation of the concentration level of hydroxytyrosol (HT) that laboratory strains of metabolically engineered PBBL strains of Escherichia coli grown in aqueous nutritive media when they would produce HT themselves. For this reason, we tested the relevant E. coli parental strains which they were then metabolically engineered to evolve genetically our PBBL strains (mentioned above) that would be led genetically manipulated to heterologously produce the commercially important HT that built the main active ingredient recipe of bactericidal formulation PBBL-X (mentioned above).

Thus, we have tested growth of parental *Escherichia coli* laboratory strains (HMS174 and BL-21, ATCC Source of purchase) grown in aqueous nutritive media of M9 (recipe given above in materials section), as well as in the presence of various extra constituents to detect their growth inhibition effect plotted as numbers of alive colonies forming units (cfu). The strains were grown in either sterilized conical flasks in shaking incubators, or in small bioreactor (0.5L, Eppendorf) under temperature control (not less than 30C) and oxygen-controlled conditions (not allowed to drop below atmospheric concentrations). The viability tests were performed on LB-agar Petri dishes following the bacteria relevant dilution method (to be able to count colonies starting from a sigle cell that would arise from an appropriate dillution) for a period of time up to 48 hours.

The results showed that all *E. coli* parental strains were grown normally like the control (growth in M9 alone) or in the additional presence of M9 plus copper sulfate (40 µM), or M9 plus sodium carbonate (5 mM), or M9 plus Hydroxytyrosol (HT100, 100 µg/ml; HT200, 200 µg/ml) either for 24h (Fig. 2) or 48h (Fig. 3). However, under the same growth conditions, when in the M9 HT was added either at 200 µg/ml, in combination with either copper sulfate (40 µM), or sodium carbonate (5 mM), the E. coli growth was inhibited at 24h (Fig. 2). Even more the combination of M9 plus Hydroxytyrosol at 100 µg/ml sodium carbonate (5 mM), needed at least 48h to completely inhibit E. coli growth at these conditions. These results show the deleterious effect of combination of HT with either copper sulfate or sodium carbonate on E. coli in aqueous nutritive media of M9.

Therefore, it is clearly shown in Figure 2, bactericidal formulations that completely inhibited E. coli growth in aqueous M9 nutritive medium (trantas), combined minimal inhibitory concentrations (MICs) of HT at 100µg/ml including CuSO₄ at 40 µM. Alternatively, complete growth inhibition of E. coli in aqueous M9 achieved at minimal inhibitory concentrations (MICs) of HT at 200µg/ml including NaCO₃ at 5 mM. The effect was the same if E. coli cultures were kept growing at either 24 (Fig. 2) or 48h (Fig. 3).

Experimental series B. Effect of different bactericidal formulation on bacterial plant pathogenic strains of Xanthomonas campestris pv. campestris (Xcc), grown in aqueous nutritive media.

It was also of primary importance to detect similar effects of the concentration at minimally inhibitory levels of hydroxytyrosol (HT) that would affect to Xanthomonas campestris pv. campestris (Xcc), strains grown in aqueous nutritive media. For this reason, we tested Xanthomonas campestris pv. campestris (Xcc), strains which they were grown in M9 with different constituents of the recipe of bactericidal formulation PBBL-X (mentioned above).

Thus, we have tested growth of Xanthomonas campestris pv. campestris (Xcc) strains grown in aqueous nutritive media of M9 (recipe given above in materials section), as well as in the presence of various extra constituents to detect their growth inhibition effect plotted as numbers of alive colonies forming units (cfu). The strains were grown in either sterilized conical flasks in shaking incubators, under temperature- and oxygen-controlled conditions. The regular viability tests were performed on LB-agar Petri dishes following the bacteria relevant dilution method for a period of time up to 48 hours.

The results showed that all Xcc strains were grown normally like the control (growth in M9 alone) or in the additional presence of M9 plus copper sulfate (40 µM), or M9 plus sodium carbonate (5 mM), or M9 plus Hydroxytyrosol (HT100, 100 µg/ml; HT200, 200 µg/ml) either for 24h (Fig. 4) or 48h (Fig. 5). However, under the same growth conditions, when in the M9 HT was added (either at 100 or 200 µg/ml) with either copper sulfate (40 µM), or sodium carbonate (5 mM), the Xcc growth was inhibited at even less than 24h (Fig. 4) which was continued even at 48h (Fig. 5) proving the complete Xcc strains inhibition. These results show the deleterious effect of combination of HT with either copper sulfate or sodium carbonate on Xanthomonas campestris pv. campestris (Xcc), in aqueous nutritive media of M9.

Therefore, as it is clearly shown in Figure 4, bactericidal formulations that completely inhibited Xcc growth in aqueous M9 nutritive medium (Trantas et al., 2019) combined minimal inhibitory concentrations (MICs) of HT at 100µg/ml including CuSO₄ at 40 µM. Alternatively, complete growth inhibition of Xcc in aqueous M9 achieved at minimal inhibitory concentrations (MICs) of HT at 100µg/ml including NazCOs at 5 mM. The effect was the same if Xcc cultures were kept growing at either 24 (Fig. 4) or 48h (Fig. 5).

Experimental series C. Effect of different bactericidal formulation on bacterial plant pathogenic strains of *Xanthomonas campestris pv. vesicatoria (Xcv)* grown in aqueous nutritive media.

As a follow up to detect similar effects of the concentration at minimally inhibitory levels of hydroxytyrosol (HT) we tested it with another subspecies of Xanthomonas sp. to see if that natural ingredient would affect also *Xanthomonas campestris* pv. vesicatoria (Xcv), strains grown in aqueous nutritive media. For this reason, we tested Xanthomonas campestris pv. vesicatoria (Xcv), strains which they were grown in M9 with different constituents of the recipe of bactericidal formulation PBBL-X (mentioned above).

Thus, we have tested growth of Xanthomonas campestris pv. vesicatoria (Xcv) strains (Xcv strain HMU collection) grown in aqueous nutritive media of M9 (recipe given above in materials section), as well as in the presence of various extra constituents to detect their growth inhibition effect plotted as numbers of alive colonies forming units (cfu). The strains were grown in either sterilized conical flasks in shaking incubators, under temperature- and oxygen-controlled conditions. The regular viability tests were performed on LB-agar Petri dishes following the bacteria relevant dilution method for a period of time up to 48 hours. The results showed that all *Xcv* strains were grown normally like the control (growth in M9 alone) or in the additional presence of M9 plus copper sulfate (40 µM), or M9 plus sodium carbonate (5 mM), or M9 plus Hydroxytyrosol (HT100, 100 µg/ml; HT200, 200 µg/ml) either for 24h (Fig. 4) or 48h (Fig. 5). However, under the same growth conditions, when in the M9 HT was added (either at 100 or 200 µg/ml) with either copper sulfate (40 µM), or sodium carbonate (5 mM), the Xcv growth was inhibited at even less than 24h (Fig. 6) which was continued even at 48h (Fig. 7) proving also the complete Xcv strains inhibition. These results show the deleterious effect of combination of HT with either copper sulfate or sodium carbonate on *Xanthomonas campestris pv. vesicatoria (Xcv)* strains in aqueous nutritive media of M9.

Therefore, as it is clearly shown in Figure 6, bactericidal formulations that completely inhibited Xcv growth in aqueous M9 nutritive medium (Trantas et al., 2019) combined minimal inhibitory concentrations (MICs) of HT at 100µg/ml including CuSO₄ at 40 µM. Alternatively, complete growth inhibition of Xcv occurred in aqueous M9 at minimal inhibitory concentrations (MICs) of HT at 100µg/ml including Na₂CO₃ at 5 mM. The effect was the same if Xcv cultures were kept growing at either 24 (Fig. 6) or 48h (Fig. 7).

Experimental series D. Effect of PBBL-X bactericidal formulation on artificially infected broccoli plants with plant pathogenic strains of Xanthomonas campestris pv. campestris (Xcc) grown in growth chamber conditions.

Finally, after we established the minimally inhibitory concentration levels of hydroxytyrosol (HT) under the controlled growth conditions both for the Xcc or Xcv species of Xanthomonas genus grown in aqueous nutritive media of M9, when applied at either at 100 or 200 µg/ml in combination with either copper sulfate (40 µM), or sodium carbonate (5 mM), that were both inhibited completely at less than 24h we continued experiments with plants. Under various tested we chose to work with plants with short growth cycle like those that Xcc or Xcv prefer as hosts like broccoli. In our initial tests we wanted to avoid the use of copper as it is known to have a plant protective effect though at much higher concentrations. Thus, we focus on the combination of HT with sodium carbonate. We have shown that H₂O₂ was the product of such combination, however, when applied directly to plants this effect had to be standardized. As a result we discovered that if were to apply those substances in plants artificially infected with *Xcc* (most important as it was similar in action to *Xylella sp)* to exert full inhibition and not affecting the plants themselves, we had to alter the combination and to create the final bactericidal formulation that we eventually used and claim as formula recipe. We found that HT cannot be active in open atmosphere conditions since due to strong antioxidant activity it may be deteriorating faster under the presence of oxygen. We discovered that under certain pH conditions, also considering of the inhibitory effect of sodium carbonate on *Xanthomonas campestris pv. campestris (Xcc)* strains grown in aqueous nutritive media of M9, creation of buffering conditions at pH above 9.0 showed a much greater inhibitory effect. This maybe due to fact that HT possessing a pKa 9.45 thus behaving at those pH values showing then the strongest acidic capacity which can be created by the presence of 2 mM Na₂CO₃ and 5 mM NaHCO₃, (buffering conditions at pH 9.0 and above) as we have found it is then important to act as an inhibitor to Xanthomonas campestris pv. campestris (Xcc) strains by causing oxidative damage and cell death induced by H₂O₂ production (Karkovic Markovic et al., 2019) as we have found. All the reasons above led us to create the bactericidal formulate coded as PBBL-X (X=the final concentration of HT used in µg/ml) comprised of HT in aqueous solution and the so-called buffer system in the presence of 2 mM Na₂CO₃ and 5 mM NaHCO₃, creating a pH value at 9,9.

We have applied PBBL-300 and PBBL-600 with the technique described above at the methodology section in artificially infected plants of broccoli with *Xanthomonas campestris pv. campestris (Xcc)* strain. The application of formulates PBBL-300 and PBBL-600 was applied to plants in 3 applications as described, a) 2h before the infection, b)2h after the infection and c) 24h after the infection. The results presented in Figure 8, show the deleterious effect of combination of bactericidal formulation PBBL-X (mentioned above) at both HT final concentrations 300µg/ml and 600µg/ml. Both controls which concerned plants that were only artificially infected with either no other protective treatment (Empty square symbols in Figure 8) or if only treated with PBBL-X-BLANK (no HT present, empty diamond symbols in Figure 8), showed similar symptomatic behavior starting at the 10th and 12th.day respectively. However, it should be pointed out that PBBL-600 exerted the best plant protective even after the 24th day of infection revealing the strength of PBBL-600 formulation.

Therefore, as it is clearly shown in Figure 8, bactericidal formulations PBBL-300 completely inhibited Xcc at minimal inhibitory concentrations (MICs) of fully protected artificially infected broccoli plants Brassica oleracea var. italica applied at (HT at 300µg/ml combined with 2 mM Na₂CO₃ and 5 mM NaHCO₃), but up to 22days after infection of *Xanthomonas campestris pv. campestris (Xcc).* However, concentrations of PBBL-600 applied (HT at 600µg/ml combined with 2 mM Na₂CO₃ and 5 mM NaHCOs), fully protected with no symptoms at all up to 24days after infection of *Xanthomonas campestris pv. campestris (Xcc).*

Due to similarity in pathogenicity this explains the similarity of preliminary results obtained with *Xylella sp.*

### References

Angelis, A., Hamzaoui, M., Aligiannis, N., Nikou, T., Michailidis, D., Gerolimatos, P., Termentzi, A., Hubert, J., Halabalaki, M., Renault, J.-H., 2017. An integrated process for the recovery of high added-value compounds from olive oil using solid support free liquid-liquid extraction and chromatography techniques. J. Chromatogr. 1491, 126-136.
Ben Moussa, I. E., Mazzoni, V., Valentini, F., Yaseen, T., Lorusso, D., Speranza, S., Digiaro, M., Varvaro, L., Krugner, R., D'Onghia, A. M., 2016. Seasonal fluctuations of sap-feeding insect species infected by Xylella fastidiosa in Apulian olive groves of southern Italy. J. Econ. Entomol. 109, 1512-1518.
Bisignano, G., Tomaino, A., Lo Cascio, R., Crisafi, G., Uccella, N., Saija, A., 1999. On the in-vitro antimicrobial activity of oleuropein and hydroxytyrosol. J. Pharm. Pharmacol. 51, 971-4.
Bragard, C., Dehnen-Schmutz, K., Di Serio, F., Gonthier, P., Jacques, M. A., Jaques Miret, J. A., Justesen, A. F., MacLeod, A., Magnusson, C. S., 2019. Effectiveness of in planta control measures for Xylella fastidiosa. EFSA Journal. 17, e05666.
Cardinale, M., Luvisi, A., Meyer, J. B., Sabella, E., De Bellis, L., Cruz, A. C., Ampatzidis, Y., Cherubini, P., 2018. Specific fluorescence in situ hybridization (FISH) test to highlight colonization of xylem vessels by Xylella fastidiosa in naturally infected olive trees (Olea europaea L.). Frontiers in plant science. 9, 431.
Chatterjee, S., Almeida, R. P. P., Lindow, S., 2008. Living in two Worlds: The Plant and Insect Lifestyles of Xylella fastidiosa. Annu. Rev. Phytopathol. 46, 243-271.
da Silva, F. R., Vettore, A. L., Kemper, E. L., Leite, A., Arruda, P., 2001. Fastidian gum: the Xylella fastidiosa exopolysaccharide possibly involved in bacterial pathogenicity. FEMS Microbiol. Lett. 203, 165-171.
Dow, J., Daniels, M., 2000. Xylella genomics and bacterial pathogenicity to plants. Yeast. 17, 263-271.
EFSA Panel on Dietetic Products, N., Allergies, 2011. Scientific Opinion on the substantiation of health claims related to polyphenols in olive and protection of LDL particles from oxidative damage (ID 1333, 1638, 1639, 1696, 2865), maintenance of normal blood HDL cholesterol concentrations (ID 1639), maintenance of normal blood pressure (ID 3781), "antiinflammatory properties" (ID 1882), "contributes to the upper respiratory tract health" (ID 3468), "can help to maintain a normal function of gastrointestinal tract" (3779), and "contributes to body defences against external agents" (ID 3467) pursuant to Article 13(1) of Regulation (EC) No 1924/2006. EFSA Journal. 9, 2033.
El-Kholy, M., Avanzato, D., Caballero, J., Chartzoulakis, K., Vita Serman, F., Perry, E., 2012. Following olive footprints (Olea europaea L.)-cultivation and culture, folklore and history, tradition and uses. International Society for Horticultural Science (ISHS).
EU, 2015. Commission Implementing Decision (EU) 2015/789 of 18 May 2015 as regards measures to prevent the introduction into and the spread within the Union of Xylella fastidiosa (Wells et al.). Official Journal of the European Union. 125, 36-53.
Fabiani R, Sepporta MV, Mazza T, Rosignoli P, Fuccelli R, De Bartolomeo A, et al. 2011. Influence of cultivar and concentration of selected phenolic constituents on the in vitro chemiopreventive potential of olive oil extracts. Journal of Agricultural and Food Chemistry, 59(15):8167-74.
Fernández-Bolaños, J. G., López, O, López-García, M. A., Marset, A., 2012. Biological properties of hydroxytyrosol and its derivatives. In: Boskou, D., (Ed.), Olive oil - Constituents, quality, health properties and bioconversions. InTech, pp. 375-396.
Fernandez-Mar, M. I., Mateos, R., Garcia-Parrilla, M. C., Puertas, B., Cantos-Villar, E., 2012. Bioactive compounds in wine: Resveratrol, hydroxytyrosol and melatonin: A review. Food Chem. 130, 797-813.
lonescu, M., Zaini, P. A., Baccari, C., Tran, S., da Silva, A. M., Lindow, S. E., 2014. Xylella fastidiosa outer membrane vesicles modulate plant colonization by blocking attachment to surfaces. Proceedings of the National Academy of Sciences. 111, E3910-E3918.
Karkovic Markovic, A., Toric, J., Barbaric, M., & Jakobusic Brala, C. (2019). Hydroxytyrosol, Tyrosol and Derivatives and Their Potential Effects on Human Health. Molecules (Basel, Switzerland), 24(10), 2001. https://doi.org/10.3390/molecules24102001
Kumar, S., Bansal, K., Patil, P. P., Patil, P. B., 2019. Phylogenomics insights into order and families of Lysobacterales. Access microbiology. 1.
Maddox, C. E., Laur, L. M., Tian, L., 2010. Antibacterial activity of phenolic compounds against the phytopathogen Xylella fastidiosa. Curr. Microbiol. 60, 53-58.
Mansfield, J., Genin, S., Magori, S., Citovsky, V., Sriariyanum, M., Ronald, P., Dow, M., Verdier, V., Beer, S. V., Machado, M. A., Toth, I., Salmond, G., Foster, G. D., 2012. Top 10 plant pathogenic bacteria in molecular plant pathology. Mol. Plant Pathol. 13, 614-29.
Medina-Martinez, M. S., Truchado, P., Castro-Ibáñez, I., Allende, A., 2015. Antimicrobial activity of hydroxytyrosol: a current controversy. Biosci., Biotechnol., Biochem. 80, 801-810.
Morelli, M., García-Madero, J. M., Jos, Á., Saldarelli, P., Dongiovanni, C., Kovacova, M., Saponari, M., Baños Arjona, A., Hackl, E., Webb, S., 2021. Xylella fastidiosa in olive: A review of control attempts and current management. Microorganisms. 9, 1771.
Petit, G., Bleve, G., Gallo, A., Mita, G., Montanaro, G., Nuzzo, V., Zambonini, D., Pitacco, A., 2021. Susceptibility to Xylella fastidiosa and functional xylem anatomy in Olea europaea: revisiting a tale of plant-pathogen interaction. AoB plants. 13.
Quiles, J. L., Ramirez-Tortosa, C. M., Yaqoob, P. Eds.), 2006. Olive oil and health. CABI, UK.
Ryan, R. P., Vorhölter, F.-J., Potnis, N., Jones, J. B., Van Sluys, M.-A., Bogdanove, A. J., Dow, J. M., 2011. Pathogenomics of Xanthomonas: understanding bacterium-plant interactions. Nature Reviews Microbiology. 9, 344-355. Sabella, E., Aprile, A., Genga, A., Siciliano, T., Nutricati, E., Nicoli, F., Vergine, M., Negro, C., De Bellis, L., Luvisi, A., 2019. Xylem cavitation susceptibility and refilling mechanisms in olive trees infected by Xylella fastidiosa. Scientific reports. 9, 1-11.
Saponari, M., Boscia, D., Nigro, F., Martelli, G., 2013. Identification of DNA sequences related to Xylella fastidiosa in oleander, almond and olive trees exhibiting leaf scorch symptoms in Apulia (southern Italy). J. Plant Pathol. 95.
Taguri, T., Tanaka, T., Kouno, I., 2006. Antibacterial spectrum of plant polyphenols and extracts depending upon hydroxyphenyl structure. Biological and Pharmaceutical Bulletin. 29, 2226-2235.
Trantas, E., Navakoudis, E., Pavlidis, T., Nikou, T., Halabalaki, M., Skaltsounis, L., Ververidis, F., 2019. Dual pathway for metabolic engineering of Escherichia coli to produce the highly valuable hydroxytyrosol. PLoS ONE. 11.
Tsagkarakis, A. E., Afentoulis, D. G., Matared, M., Thanou, Z. N., Stamatakou, G. D., Kalaitzaki, A. P., Tzobanoglou, D. K., Goumas, D. E., Trantas, E., Zarboutis, I., Perdikis, D. C., 2018. Identification and seasonal abundance of Auchenorrhyncha with a focus on potential insect vectors of Xylella fastidiosa in olive orchards in three regions of Greece. J. Econ. Entomol. 111, 2536-2545.
Wells, J. M., Raju, B. C., Hung, H.-Y., Weisburg, W. G., Mandelco-Paul, L., Brenner, D. J., 1987. Xylella fastidiosa gen. nov., sp. nov: Gram-negative, xylem-limited, fastidious plant bacteria related to Xanthomonas spp. Int. J. Syst. Evol. Microbiol. 37, 136-143.
Wolff SP. 1994. Ferrous ion oxidation in presence of ferric ion indicator xylenol orange for measurement of hydroperoxides. Methods in enzymology. 233: 182-9.
Zoric, N., Horvat, I., Kopjar, N., Vucemilovic, A., Kremer, D., Tomic, S., Kosalec, I., 2013. Hydroxytyrosol expresses antifungal activity in vitro. Curr. Drug Targets. 14, 992-8.

## Claims

1. A method of preventing or reducing symptoms or treating plant bacterial diseases caused by plant pathogenic bacteria on a plant, comprising, contacting or administering to the plant a composition comprising an aqueous solution of hydrotyrosol and an inorganic salt, wherein the pH of the solution is in a range between 7,5 and 12

2. A method according to the claim 1, wherein the said aqueous solution comprises Hydrotyrosol and Na₂CO₃

3. A method according to claim 2, wherein the said aqueous solution comprises hydrotyrosol in a concentration between 10 and 1000 µg/ml and Na₂CO₃ in a concentration between 3 to 20 mM

4. A method according to claim 3 wherein the concentration of Hydrotyrosol is between 90 and 650 µg/ml and the Na₂CO₃ in a concentration between 4 to 6 mM

5. A method according to any of the claim 1, wherein the said aqueous solution comprises Hydrotyrosol, Na₂CO₃ and NaHCO₃.

6. A method according to claim 5, wherein the said aqueous solution comprises Hydrotyrosol in a concentration 10 and 1000 µg/ml, Na₂CO₃ in a concentration between 1 to 10 mM and NaHCO₃ in a concentration between 3 to 20 mM.

7. A method according to any of the claim 1, wherein the said aqueous solution comprises Hydrotyrosol, and CuSO₄

8. A method according to claim 7, wherein the said aqueous solution comprises Hydrotyrosol in a concentration 10 and 1000 µg/ml, CuSO₄ in a concentration between 20 and 100 µM.

9. The method according to any of the previous claims, wherein the plant pathogenic bacteria are selected from the group consisting of Acidovorax avenae, Burkholderia spec, Burkholderia glumae, Candidatus Liberibacter spec, Liberibacter asiaticus (Las), Corynebacterium, Erwinia amylovora, Erwinia carotovora (=Pectobacterium carotovorum), Erwinia carotovora subsp. atroseptica, Erwinia carotovora subsp. carotovora, Erwinia chrysanthemi, Erwinia chrysanthemi pv. zeae, Erwinia herbicola, Erwinia stewartiii, Erwinia uredovora, Dickeya dedantii, Dickeya solani, Pseudomonas syringae, Pseudomonas syringae pv. actinidae, Pseudomonas syringae pv. glycinea, Pseudomonas syringae pv. lachrymans, Pseudomonas syringae pv. tomato, Pseudomonas tumefaciens (=Agrobacterium tumefaciens), Streptomyces scabies, Xanthomonas ampelina, Xanthomonas axonopodis, Xanthomonas axonopodis pv. citri, Xanthomonas axonopodis pv. glycines, Xanthomonas campestris, Xanthomonas campestris pv. musacearum, Xanthomonas campestris pv. pruni, Xanthomonas campestris pv. viticola, Xanthomonas fragariae and Xanthomonas translucens or Xylella fastidiosa with various pathovars.

10. A method according to any of the previous claims, wherein the bacterial harmful organisms preferably are *Acidovorax avenae* in rice, Burkholderia glumae in rice, Candidatus Liberibacter spec, and/or Xanthomonas axonopodis pv. citri in citrus, Pseudomonas syringae pv. actinidae in Kiwi, Xanthomonas campestris and/or Xanthomonas campestris pv. pruni in peaches, Pseudomonas syringae pv. glycinea and/or Xanthomonas axonopodis pv. glycines in soybeans, Burkholderia spec, and/or Xanthomonas transluscens in cereals, Pseudomonas syringae, Pseudomonas syringae pv. tomato and/or Xanthomonas campestris in tomatoes, Pseudomonas syringae and/or Pseudomonas syringae pv. lachrymans in cucumbers, Erwinia atroseptica, Erwinia caratovora and/or Streptomyces scabies in potatoes; Xanthomonas ampelina, *Xanthomonas campestris* pv. viticola, Agrobacterium tumefaciens and *Xylella fastidiosa* in grapewines, *Xylella fastidiosa* in olives *Erwinia amylovora* in apple and pears; *Pectobacterium carotovorum* in potatoes; Xanthomonas campestris pv. campestris pv. in broccoli.

11. The method according to any of the previous claims, wherein the plant is a grapevine, citrus, olive, almond, coffee, alfalfa, oleander, oak, sweetgum, redbud, elm, peach, apricot, plum, blackberry, mulberry, fruit crops, vegetables, potatoes, cereals, corn, rice, broccoli and soybeans.

12. The method according to any of the previous claims, wherein contacting comprises introducing the composition solution into the plant.

13. The method according to the previous claim, wherein the contacting comprises introducing the composition solution into the plant by injection, via the root system, by spray, or by mist, by dust or dripping contacting the plant.
